# DEMANDE DE BREVET EUROPEEN

(11) **EP 4 711 170 A1**
(43) Date de publication de la demande: **18.03.2026**
(21) Numéro de dépôt: 25200698.6
(22) Date de dépôt: 08.09.2025
(51) Int. Cl.: B60K 15/03, B62D 3/12, B60K 15/063

(54) **AGENCEMENT COMPRENANT UN RÉSERVOIR ET UN MODULE DE DIRECTION FIXÉ AU RÉSERVOIR**

(30) Priorité: 12.09.2024 FR 2409705
(71) Demandeur: Renault s.a.s, 92100 Boulogne Billancourt (FR)
(72) Inventeur: CHRISTOU, PANAGIOTIS, 78084 GUYANCOURT (FR); GRENIER, LAURENT, 78084 GUYANCOURT (FR); MOUSSI, KAMEL, 78084 GUYANCOURT (FR)

(57) **Abrégé**

Agencement pour un véhicule automobile comprenant un réservoir (4) destiné à stocker un fluide énergétique et un module de direction (7) destiné à contrôler et/ou assister une orientation d'au moins une roue directrice (3G, 3D) du véhicule, le module de direction (7) étant fixé au réservoir (4).

## Description

### Domaine Technique de l'invention

L'invention concerne un agencement pour un véhicule comprenant un réservoir destiné à stocker un fluide énergétique, notamment de l'hydrogène, et un module de direction. L'invention porte également sur un véhicule, notamment un véhicule automobile, comprenant un tel agencement.

### Etat de la technique antérieure

Afin de rendre l'utilisation des véhicules moins polluante, on connaît des véhicules équipés d'une pile à combustible alimentée en énergie par de l'hydrogène. Ces véhicules embarquent donc un réservoir dans lequel de l'hydrogène est stocké avant d'être consommé par la pile à combustible. La pile à combustible fournit de l'énergie électrique qui peut être consommée directement par un moteur électrique pour faire avancer le véhicule, ou bien stockée dans une batterie électrochimique embarquée dans le véhicule.

La pression de l'hydrogène dans le réservoir peut être très importante, par exemple de l'ordre de 700 Bar. Le réservoir doit donc être particulièrement résistant aux contraintes mécaniques exercées par l'hydrogène sous pression. De plus, l'hydrogène est un gaz hautement inflammable qui provoque des risques d'incendie en cas de fuite. Les réservoirs d'hydrogène doivent donc aussi être résistants aux chocs, de manière à garantir la sécurité des passagers en cas d'accident du véhicule. Les réservoirs connus de l'état de la technique prennent généralement la forme d'une ou plusieurs bonbonnes embarquées dans le véhicule. De telles bonbonnes sont particulièrement encombrantes et complexes à intégrer au sein du véhicule.

Par ailleurs, les véhicules automobiles sont équipés d'un système de direction configuré pour contrôler ou permettre le contrôle par un conducteur du véhicule de l'orientation de deux roues directrices du véhicule. Un tel système de direction comprend généralement un module de direction, lui-même équipé d'un carter, d'une crémaillère mobile relativement au carter, de deux biellettes de direction, et d'un moteur électrique configuré pour déplacer la crémaillère relativement au carter. Chaque biellette de direction comprend une première extrémité reliée à la crémaillère et une deuxième extrémité reliée à une roue directrice. Un tel module de direction est ainsi configuré pour contrôler et/ou pour assister l'orientation des roues directrices du véhicule. En particulier, un tel module peut être configuré pour assister la manipulation du volant par le conducteur du véhicule. Un tel module de direction est alors classiquement dénommé « module de direction assistée ». Alternativement, des modules de direction peuvent aussi être configurés pour remplacer complètement l'action d'un conducteur du véhicule. Un tel module de direction est alors configuré pour contrôler de manière autonome l'orientation des roues directrices. Un tel module de direction est alors classiquement dénommé « module de direction autonome ».

Dans tous les cas, les modules de direction sont des organes particulièrement sensibles et fragiles. Un endommagement du module de direction peut conduire à un défaut de parallélisme des roues directrices, une instabilité dynamique du véhicule, voire une incapacité totale à contrôler la trajectoire du véhicule. De plus, un tel module de direction se trouve généralement positionné à proximité des roues directrices et est donc particulièrement exposé aux chocs.

Ainsi, un véhicule comprenant à la fois un réservoir de stockage d'hydrogène et un module de direction présente des contraintes architecturales complexes à satisfaire.

### Présentation de l'invention

Le but de l'invention est de fournir un agencement pour un véhicule remédiant aux inconvénients ci-dessus et améliorant les agencements connus de l'art antérieur.

Plus précisément, un premier objet de l'invention est de fournir un agencement comprenant un réservoir et un module de direction à la fois peu encombrant et permettant d'obtenir une bonne protection du réservoir et du module de direction contre les chocs.

### Résumé de l'invention

L'invention se rapporte à un agencement pour un véhicule automobile comprenant un réservoir destiné à stocker un fluide énergétique et un module de direction destiné à contrôler et/ou assister une orientation d'au moins une roue directrice du véhicule, le module de direction étant fixé au réservoir.

Le module de direction peut être positionné le long d'une paroi verticale du réservoir.

L'agencement peut comprendre une patte de fixation fixée, notamment visée, d'une part au réservoir, et fixée, notamment vissée, d'autre part au module de direction.

La patte de fixation peut comprendre une première branche fixée contre la paroi verticale du réservoir et une deuxième branche fixée contre une paroi supérieure du module de direction.

Le réservoir peut comprendre une structure rigide constituée d'un matériau composite, et le module de direction peut être fixé au réservoir par des vis de fixation pénétrant dans la structure du réservoir.

Le réservoir peut comprendre au moins une première paire de parois opposées reliées l'une à l'autre par un premier ensemble d'éléments de liaison traversant le réservoir et s'étendant parallèlement à un premier axe, le réservoir comprenant au moins une interface de fixation agencée à une extrémité d'au moins un élément de liaison, le module de direction étant fixé au réservoir par l'intermédiaire de l'au moins une interface de fixation.

L'agencement peut comprendre en outre au moins un longeron, le réservoir étant fixé à l'au moins un longeron, le module de direction étant maintenu relativement à l'au moins un longeron uniquement par l'intermédiaire du réservoir.

Le module de direction peut comprendre un carter, une crémaillère mobile relativement au carter, au moins une biellette de direction, et un actionneur tel qu'un moteur électrique configuré pour déplacer la crémaillère relativement au carter, l'au moins une biellette de direction comprenant une première extrémité reliée à la crémaillère et une deuxième extrémité destinée à être reliée à l'au moins une roue directrice pour contrôler et/ou assister l'orientation de l'au moins une roue directrice.

Le réservoir peut comprendre au moins un creux formant un volume libre destiné à accueillir l'au moins une roue directrice du véhicule, et le module de direction peut être destiné à être relié mécaniquement à l'au moins une roue directrice pour contrôler et/ou assister l'orientation de l'au moins une roue directrice.

L'invention se rapporte également à un véhicule, notamment un véhicule automobile, comprenant un agencement tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique de dessous d'un véhicule automobile équipé d'un agencement selon un mode de réalisation de l'invention.
La figure 2 est une en perspective de dessus dudit agencement, ledit agencement comprenant un réservoir et un module de direction.
La figure 3 est une vue partielle et en perspective du réservoir.
La figure 4 est une vue partielle et en transparence du réservoir.
La figure 5 est une vue en coupe d'une interface de fixation du réservoir.
La figure 6 est une vue en perspective de dessus du module de direction.
La figure 7 est une vue en perspective de dessous du module de direction.
La figure 8 est une vue en coupe verticale et longitudinale dudit agencement.

### Description détaillée

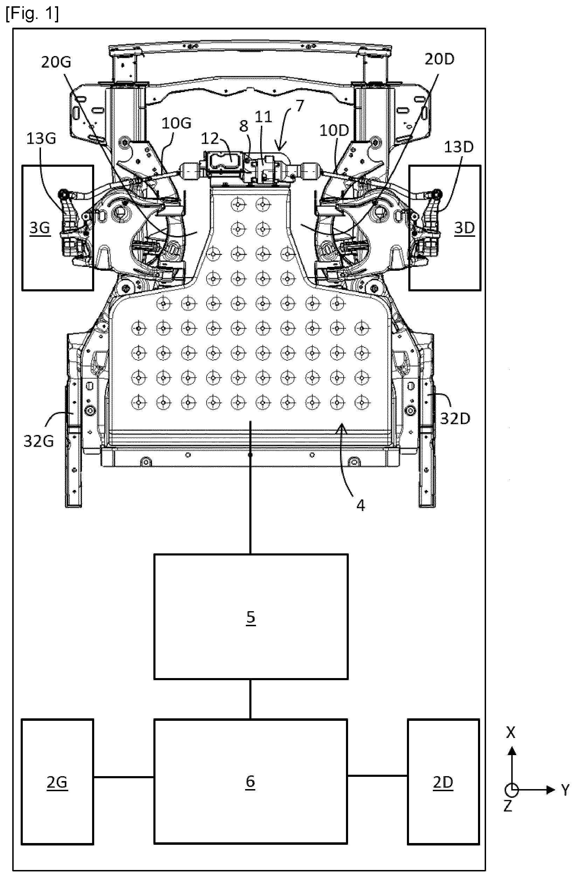

La figure 1 illustre schématiquement un véhicule 1 automobile selon un mode de réalisation de l'invention. Le véhicule 1 peut être, par exemple, un véhicule particulier ou un véhicule utilitaire. En variante, il pourrait être un camion, un bus, un engin de levage, un engin agricole ou même tout autre type de véhicule terrestre.

Dans ce document, l'axe X désigne l'axe longitudinal du véhicule 1. En marche avant et en ligne droite, le véhicule 1 progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule 1. L'axe Z désigne l'axe perpendiculaire à l'axe X et à l'axe Y. On considère que le véhicule 1 repose sur un sol horizontal. L'axe Z est un axe vertical, orienté de bas en haut. Les axes X, Y et Z forment un repère orthogonal.

Le véhicule 1 comprend d'une part un système de motorisation configuré pour entraîner des roues motrices 2G, 2D du véhicule 1, et d'autre part un système de direction configuré pour orienter des roues directrices 3G, 3D du véhicule. Le système de motorisation entraîne les roues motrices 2G, 2D en rotation autour d'un axe de rotation parallèle à l'axe Y lorsque le véhicule avance en ligne droite. Le système de direction oriente les roues directrices 3G, 3D autour d'un axe parallèle ou sensiblement parallèle à l'axe Z.

Le système de motorisation comprend un réservoir 4 destiné à stocker de l'hydrogène, une pile à combustible 5 apte à transformer de l'hydrogène en un courant électrique, et un moteur électrique 6 alimenté en énergie par un courant électrique issu de la pile à combustible 5. Le moteur électrique 6 est configuré pour entraîner les roues motrices 2G, 2D du véhicule 1 en rotation, de manière à faire avancer (ou reculer) le véhicule 1.

Selon le mode de réalisation présenté, les roues motrices 2G, 2D sont des roues avant et les roues directrices 3G, 3D sont des roues arrière. Les roues motrices 2G, 2D peuvent néanmoins être également des roues directrices. Dans ce cas, le véhicule est équipé de quatre roues directrices. De même, les roues directrices 3G, 3D peuvent également être des roues motrices. Dans ce cas, le véhicule est équipé de quatre roues motrices. Le moteur électrique 6 peut être logé dans un compartiment moteur du véhicule. Alternativement, chaque roue motrice peut être équipée d'un moteur électrique configuré pour entraîner la roue motrice.

Selon d'autres modes de réalisation de l'invention, les roues motrices et les roues directrices pourraient correspondre aux mêmes roues et celles-ci pourraient être agencées à l'avant ou à l'arrière du véhicule 1. Selon un autre mode de réalisation les roues motrices pourraient être agencées à l'arrière, et les roues directrices pourraient être agencées à l'avant du véhicule 1.

Le système de direction comprend un module de direction 7 relié mécaniquement aux roues directrices 3G, 3D. En particulier, le module de direction 7 comprend un carter 8, une crémaillère 9 mobile relativement au carter 8, deux biellettes de direction 10G, 10D, et un actionneur 11 tel qu'un moteur électrique configuré pour déplacer la crémaillère 9 relativement au carter 8. La crémaillère 9 (visible sur la figure 9) est mobile relativement au carter parallèlement à l'axe Y. La crémaillère et l'actionneur 11 peuvent être logés à l'intérieur du carter 8. Le carter 8 peut présenter une forme globalement allongée, notamment selon l'axe Y. Les billettes de direction 10G, 10D peuvent être agencées à deux extrémités opposées du carter 8. Les biellettes de direction 10G, 10D permettent de relier mécaniquement le module de direction 7 au roues directrices 3G, 3D. La biellette de direction 10G comprend une première extrémité reliée à la crémaillère 9, et une deuxième extrémité reliée à la roue directrice 3G. De même, la biellette de direction 10D comprend une première extrémité reliée à la crémaillère 9, et une deuxième extrémité reliée à la roue directrice 3D. Les biellettes 10G, 10D, peuvent s'étendre au moins grossièrement parallèlement à l'axe Y. Elles peuvent être fixées respectivement par un moyen de liaison rotule à un porte fusée 13G, 13D des roues directrices 3G, 3D.

Le module de direction 7 peut être configuré pour contrôler et/ou pour assister l'orientation des roues directrices 3G, 3D. Le module de direction 7 peut donc être un module de direction assistée ou un module de direction autonome. Le module de direction 7 peut également être équipé d'une unité de commande électronique 12 reliée électriquement à l'actionneur 11. L'unité de commande électrique peut être configurée pour émettre des ordres de commande d'activation de l'actionneur 11 afin d'orienter les roues directrices 3G, 3D selon une orientation souhaitée.

Selon le mode de réalisation présenté, le module de direction 7 est destiné à contrôler de manière autonome l'orientation des roues arrière du véhicule, en complément de l'orientation de l'orientation des roues avant. L'orientation des roues avant peut être contrôlée manuellement au moyen d'un volant, et éventuellement au moyen d'un module de direction assisté secondaire. L'orientation des roues arrière peut être calculée en fonction de l'orientation des roues avant afin d'améliorer le comportement dynamique du véhicule et/ou afin de réduire un rayon de braquage du véhicule, ce qui permet de faciliter certaines manœuvres.

Le module de direction 7 peut être configuré pour orienter les roues directrices d'un angle de plus ou moins 5° autour d'un axe vertical ou sensiblement vertical, voire un angle de plus ou moins 10° autour d'un axe vertical ou sensiblement vertical.

Comme expliqué précédemment, le module de direction 7 pourrait aussi être adapté pour contrôler l'orientation des roues avant et/ou pourrait équiper un véhicule comprenant uniquement deux roues directrices. Le module de direction 7 peut éventuellement être relié mécaniquement à un volant destiné à être manipulé par un conducteur du véhicule pour contrôler l'orientation des roues directrices 3G, 3D.

Le module de direction 7 est avantageusement fixé au réservoir 4. Ainsi on regroupe deux composants particulièrement sensibles du véhicule. La protection prévue pour l'un des composants bénéfice à l'autre composant et inversement.

De préférence, le module de direction 7 est positionné le long d'une paroi verticale 14 du réservoir 4. Ainsi, le module de direction 7 est bien protégé contre les chocs horizontaux. En particulier, selon le mode de réalisation présenté, la paroi verticale 14 est une un paroi arrière du module de direction 7. En cas de choc arrière contre le véhicule 1, dans l'hypothèse où un effort orienté vers l'avant serait transmis au module de direction 7, le déplacement du module de direction 7 serait limité par la paroi verticale 14. Le module de direction 7 pourrait ainsi se déplacer seulement de l'ordre de quelques millimètres vers l'avant, voire au plus de l'ordre d'un centimètre. Les déformations ou endommagements du module de direction 7 pourraient ainsi être minimisés. Ceci permet de conserver plus facilement un véhicule manœuvrant, suite d'un choc arrière contre le véhicule 1. Le véhicule 1 peut ainsi plus facilement être dégagé de la zone du choc et mis en sécurité ou transporté vers un garage automobile. De plus, comme le module de direction est agencé contre la paroi verticale 14 arrière du réservoir, il est naturellement protégé par le réservoir des chocs avant et/ou latéraux. On comprend qu'un tel avantage pourrait également être obtenu en fixant le module de direction 7 le long d'une paroi latérale et/ou le long d'une paroi avant du réservoir

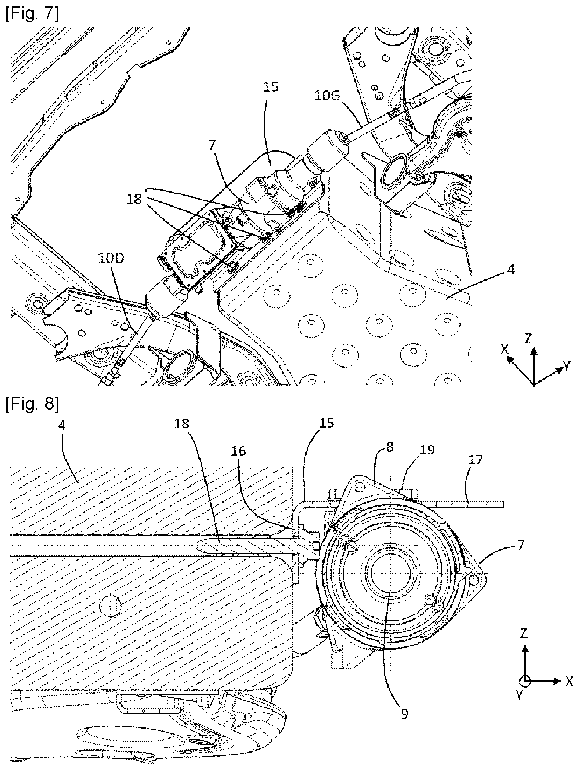

Avantageusement le module de direction 7 ne dépasse pas vers le bas ou vers le haut du réservoir 4. Autrement dit, et comme cela est visible sur la figure 8, le point le plus bas du module de direction 7 est plus haut que le point le plus bas du réservoir 4. De même, le point le plus haut du module de direction 7 est plus bas que le point le plus haut du réservoir 4. La protection du module de direction 7 est ainsi encore renforcée.

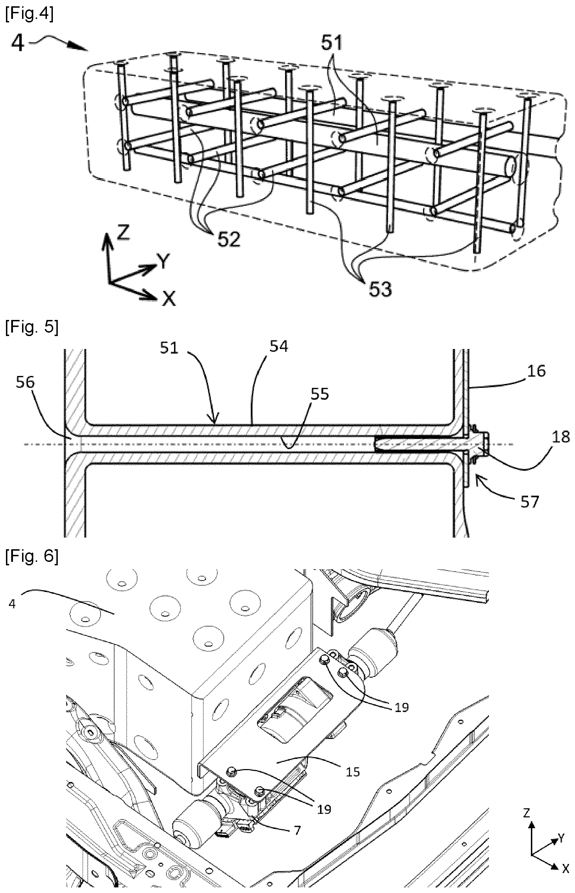

Le module de direction 7 est fixé au réservoir 4 par l'intermédiaire d'une patte de fixation 15. Plus précisément, la patte de fixation 15 est d'une part fixée, notamment vissée, directement au réservoir 4, et d'autre part fixée, notamment visée, directement au carter 8 du module de direction. La patte de fixation 15 peut être visée au réservoir 4 par un premier ensemble de vis de fixation 18, notamment trois vis de fixation 18 (visibles sur la figure 7). La patte de fixation peut être visée au module de direction 7 par un deuxième ensemble de vis de fixation 19, notamment quatre vis de fixation 19 (visibles sur la figure 6).

La patte de fixation 15 peut être par exemple une pièce métallique et monolithique. Elle peut être notamment issue d'une feuille métallique, par exemple en acier, découpée et pliée selon une forme souhaitée. En particulier, la patte de fixation 15 peut comprendre une section longitudinale et verticale (visible sur la figure 9) présentant la forme d'un « L ». La patte de fixation comprend une première branche 16, verticale, fixée contre la paroi verticale 14 du réservoir et une deuxième branche 17, fixée contre une paroi supérieure du module de direction. Le module de direction 7 est donc suspendu à la patte de fixation 15. Une telle patte de fixation 15 permet d'envisager la réutilisation de modules de direction initialement prévus pour être fixés par le dessus à un berceau de caisse, notamment à une face inférieure d'un tel berceau. La deuxième branche 17 est pourvue d'une ouverture, notamment de forme rectangulaire, adaptée pour le passage d'une forme protubérante du carter 8.

En remarque les biellettes de direction 10G, 10D sont des bras articulés destinés à transmettre un effort orienté dans la direction dans laquelle elles s'étendent c'est-à-dire au moins grossièrement dans la direction de l'axe Y). Les biellettes de direction ne sont pas configurées pour supporter le poids du module de direction 7. Au contraire, le poids du module de direction 7 est exclusivement supporté par le réservoir 4, par l'intermédiaire de la patte de fixation 15.

Avantageusement, les moyens de fixation utilisés pour fixer le module de direction 7 au réservoir 4 peuvent comprendre des moyens de filtration des vibrations, notamment des éléments absorbants tels que des plots en élastomère ou « silent blocs ». On évite ainsi que d'éventuelles vibrations transmises par la route au module de direction 7 par l'intermédiaire des roues directrices 3G, 3D, soient ensuite transmises au réservoir 4. On évite ainsi la génération de bruits ou de vibrations perceptibles par les usagers du véhicule 1, en particulier lorsque le réservoir 4 s'étend à proximité directe de sièges du véhicule comme cela sera expliqué par la suite.

Selon le mode de réalisation présenté, le réservoir 4 est donc destiné à stocker de l'hydrogène ou plus précisément du dihydrogène. Selon d'autres variantes, le réservoir 4 pourrait être configuré pour stocker d'autres formes de gaz énergétiques, par exemple du gaz de pétrole liquéfié ou du gaz naturel. Le réservoir pourrait même être destiné à stocker un carburant liquide tel que de l'essence, du gazole ou encore de l'éthanol. Dans une telle hypothèse, le véhicule pourrait comprendre un moteur à combustion apte à transformer l'énergie du fluide énergétique en force électromotrice.

D'une manière générale, le réservoir 4 est destiné à contenir un fluide énergétique, c'est-à-dire un fluide formant une réserve d'énergie fluide, convertible en une force électromotrice apte à déplacer le véhicule. Le réservoir est donc un organe du véhicule 1 qui lui confère une certaine autonomie. Le réservoir 4 comprend notamment une ouverture d'entrée permettant de remplir le réservoir avec un fluide énergétique et une ouverture de sortie pour délivrer puis consommer le fluide énergétique contenu dans le réservoir.

Le réservoir 4 est destiné à stocker le fluide énergétique sous pression, c'est-à-dire à une pression strictement supérieure à la pression atmosphérique. En l'espèce, le réservoir est destiné à stocker le fluide énergétique, notamment de l'hydrogène, à une pression supérieure ou égale à 700 Bar. En variante, le réservoir pourrait être destiné à stocker le fluide énergétique à une pression différente, par exemple une pression supérieure ou égale à 300 Bar, ou 500 Bar, ou 1000 Bar, ou encore toute autre valeur. Le réservoir comprend ainsi une structure rigide apte à supporter les efforts exercés par le fluide sous pression qu'il contient, c'est-à-dire des efforts centrifuges agissant depuis l'intérieur du réservoir et qui tendent à le faire éclater.

En outre, le réservoir 4 peut avoir une contenance supérieure ou égale à 50 litres, de préférence supérieure ou égale à 100 litres, voire supérieure ou égale à 150 litres. Un réservoir de 100 litres permet de stocker environ 4 kg d'hydrogène à 700 Bar, ce qui confère une autonomie de l'ordre de 300 km à un véhicule automobile.

La structure du réservoir 4 est également apte à supporter des chocs importants, notamment des chocs se produisant en cas d'accident du véhicule 1, sans générer de fuite du fluide énergétique vers l'extérieur. Les données d'accidentologie et/ou des simulations et/ou des crash test permettent de dimensionner la structure, notamment des épaisseurs de parois requises, de sorte qu'aucune fuite de fluide énergétique ne se produise, même pour les accidents les plus violents.

Avantageusement, le réservoir 4 dont la grande résistance est nécessaire pour supporter des pressions élevées du fluide énergétique qu'il contient, ainsi que pour garantir la sécurité des passagers du véhicule 1 en cas d'accident, peut être mis à profit pour rigidifier la structure du véhicule. Le réservoir 4 peut donc être considéré comme une partie intégrante de la structure porteuse du véhicule. Le réservoir est apte à supporter le poids exercé par d'autres équipements du véhicule, et fournit également un support permettant de fixer ces équipements. Le réservoir 4 fournit ainsi un support rigide permettant de fixer le module de direction 7. Le réservoir 4 permet notamment de s'affranchir de l'utilisation d'un berceau métallique pour soutenir le module de direction 7 comme cela est habituellement prévu avec les véhicules selon l'état de la technique. Le véhicule 1 ne comprend donc aucun berceau supportant le module de direction 7. Le poids et le volume occupé par un tel composant peuvent ainsi être épargnés.

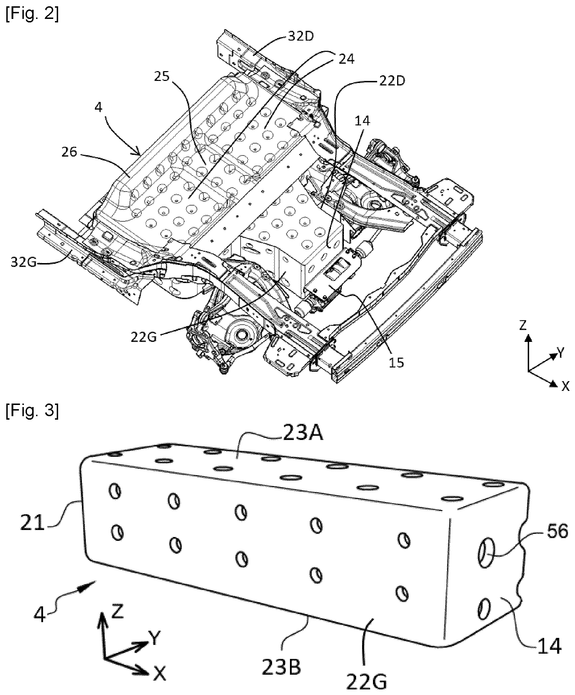

Le réservoir 4 s'étend entre deux longerons 32G, 32D auxquels il est fixé. Les deux longerons 32G, 32D s'étendent parallèlement à l'axe X de part et d'autre du véhicule. Le réservoir 4 fait ainsi fonction de traverse en reliant rigidement les deux longerons 32G, 32D l'un à l'autre. L'agencement du réservoir entre les deux longerons 32G, 32D, permet aussi de s'affranchir de traverses s'étendant selon l'axe Y et reliant les longerons. Les deux longerons 32G, 32D sont reliés à l'arrière par une traverse 33, notamment une traverse de choc. Comme cela est visible sur la figure 2, un espace, notamment de forme globalement rectangulaire est donc formé entre la paroi verticale arrière 14, les deux longerons 32G, 32D et la traverse 33. Le module de direction 7 est positionné dans cet espace, et est ainsi bien protégés sur tous ses côtés.

Le réservoir 4 est apte à supporter des charges qui peuvent atteindre au moins cent kilogrammes, voire plusieurs centaines de kilogrammes. Ces charges peuvent être des charges statiques comme celles qui sont exercées par le poids d'équipements tels que des sièges du véhicule et/ou le poids des passagers du véhicule. Ces charges peuvent également être des charges dynamiques comme celles qui apparaissent dans des situations particulières comme lors d'un choc contre le véhicule. Ces différentes charges statiques ou dynamiques peuvent exercer des efforts de compression ou de cisaillement sur le réservoir. Ces efforts sont donc orientés dans une direction différente des efforts centrifuges exercés par le fluide énergétique sous pression à l'intérieur du réservoir. Avantageusement, la résistance du réservoir nécessaire pour résister à la pression exercée par le fluide énergétique qu'il contient est donc aussi utilisée pour supporter des charges qui s'exercent dans des directions différentes.

Le réservoir 4 peut comprendre une forme grossièrement parallélépipédique. Il peut ainsi comprendre trois paires de parois opposées. En relation avec les figures 3 et 4, une première paire de parois opposées est composée d'une paroi verticale avant 21 et de la paroi verticale 14 arrière précédemment décrite. Les parois 14 et 21 s'étendent sensiblement parallèlement aux axes Y et Z. Une deuxième paire de parois opposées est composée d'une paroi latérale gauche 22G et d'une paroi latérale droite 22D. Les parois 22G et 22D s'étendent sensiblement parallèlement aux axes X et Z. Une troisième paire de parois opposées est composée d'une paroi supérieure 23A et d'une paroi inférieure 23B. Les parois 23A et 23B s'étendent sensiblement parallèlement aux axes X et Y. En variante, toute autre forme du réservoir pourrait être envisagée.

Comme cela est bien visible sur la figure 1, le réservoir 4 comprend deux creux 20G, 20D formant deux volumes libres accueillant respectivement les roue directrices 3G et 3D. Le réservoir 4 a ainsi une forme optimisant le volume libre autour des roues directrices 3G et 3D. Les dimensions des creux 20G et 20D, sont adaptées pour y intégrer notamment les portes fusées 13G 13D et pour permettre le libre pivotement des roues directrices 3G, 3D. En raison de la présence des creux 20G, 20D, la paroi verticale avant 21 présente une plus grande longueur que la paroi verticale arrière 14 selon l'axe transversal Y. La largeur de la paroi vertical arrière 14 selon l'axe Y est sensiblement égale à la largeur de la patte de fixation 15 selon ce même axe. Les paroi latérales 22G, 22D présentent une plus faible longueur que la longueur totale du réservoir 4 selon l'axe longitudinal X.

Le réservoir 4 est agencé en partie arrière du véhicule 1, notamment au niveau d'une partie arrière d'un soubassement du véhicule. Le réservoir 4 s'étend notamment sous une rangée de sièges arrière du véhicule et/ou sous un coffre du véhicule, voire jusqu'au niveau d'un parechoc arrière du véhicule. Le réservoir peut ainsi être destiné à supporter la charge exercée par les sièges arrière et l'ensemble des objets rangés dans le coffre du véhicule.

La paroi supérieure 23A peut comprendre des renfoncements 24 destinés à recevoir l'assise de sièges du véhicule, de sorte que les passagers assis sur ces sièges ne soient pas installés trop haut. Entre les renfoncements 24, la paroi supérieure 23A comprend une nervure centrale 25 en saillie qui permet d'augmenter le volume du réservoir sans pénaliser le confort des passagers installés sur les sièges au-dessus du réservoir. Avantageusement, le réservoir 4 comprend également un dispositif anti sous-marinage 26. Un tel dispositif forme une butée empêchant l'assise des sièges au-dessus du réservoir de glisser vers l'avant en cas d'accident. Le dispositif anti sous-marinage 26 est formé par une proéminence s'étendant vers l'avant et vers le haut devant les renfoncements 24. Le dispositif anti sous-marinage 26 peut comprendre une forme profilée selon l'axe Y et/ou s'étendre sur toute la largeur du réservoir selon l'axe Y. Outre l'amélioration de la sécurité des passagers, l'intégration du dispositif anti sous-marinage 26 au réservoir permet d'augmenter le volume du réservoir et donc d'augmenter sa capacité de stockage en fluide énergétique.

Le réservoir 4 peut être isolé de l'habitacle par un simple élément de protection, par exemple en plastique, qui recouvre le réservoir. Aucun élément structurel ne doit être intégré entre le réservoir 4 et les sièges du véhicule au-dessus du réservoir puisque ce dernier possède la résistance suffisante pour supporter le poids des sièges et des passagers assis sur ces sièges.

Avantageusement, la structure du réservoir 4 est en matériau composite. Un tel matériau est plus léger que l'acier et même que tout autre métal pour une résistance équivalente. De plus, les procédés de fabrication de composants en matériau composite permettent de réaliser des structures avec une grande diversité de formes géométriques. Des formes de structure plus complexes que celles obtenues en métal peuvent ainsi être envisagées de manière à exploiter tout volume disponible du véhicule et ainsi augmenter la contenance du réservoir. Des formes plus complexes de réservoir peuvent en particulier être préconisées lorsque les réservoirs sont destinés à stocker un gaz sous pression plutôt qu'un liquide car, contrairement à un liquide, le gaz ne présente pas de risque de rétention dans le réservoir.

Le matériau composite peut comprendre une structure drapée ou préformée, et/ou des matériaux tressés et imprégnés de résine. Le matériau composite peut être constitué à base d'éléments de renforcement et d'une matrice. Les éléments de renforcement peuvent comprendre des fibres de carbone ou de verre, qui sont des matériaux légers, ou encore du Kevlar (marque déposée) qui présente une plus grande résistance aux chocs. La matrice peut être une matrice organique, par exemple de la résine époxyde, de la résine phénolique ou un polyester modifié. La matrice peut également être une matrice métallique.

Les figures 3 à 5 illustrent en vue de perspective la structure du réservoir 4. Les parois 14 et 21 sont reliées l'une à l'autre par un premier ensemble d'éléments de liaison 51 s'étendant parallèlement à l'axe X. De même, les parois 22G et 22D sont reliées l'une à l'autre par un deuxième ensemble d'éléments de liaison 52 s'étendant parallèlement à l'axe Y et les parois 23A et 23B sont reliées l'une à l'autre par un troisième ensemble d'éléments de liaison 53 s'étendant parallèlement à l'axe Z.

Les éléments de liaison 51, 52, 53 traversent le réservoir 4 de part en part entre deux parois opposées. Les éléments de liaison agissent comme des tirants renforçant la résistance du réservoir : ils sont sollicités en traction lorsque le fluide énergétique contenu dans le réservoir exerce une pression sur les parois 14, 21, 22G, 22D, 23A et 23D. Les éléments de liaison 51, 52, 53 sont agencés à l'intérieur de l'enveloppe du réservoir 4 et non en périphérie de cette enveloppe.

Selon une variante de réalisation, le réservoir 4 pourrait ne comprendre qu'un seul ensemble d'éléments de liaison ou seulement deux ensembles d'éléments de liaison parmi les trois ensembles d'éléments de liaison 51, 52, 53. En variante, tout ou partie des ensembles d'éléments de liaison 51, 52, 53 pourraient s'étendre dans des directions différentes des axes X, Y et Z, pourvu que l'axe selon lequel chacun des ensembles d'éléments de liaison s'étend forme un angle non nul avec l'axe selon lequel les autres ensembles d'éléments de liaison s'étendent. Avantageusement, les trois axes selon lesquels s'étendent les trois ensembles d'éléments de liaison 51, 52 et 53 sont perpendiculaires entre eux de manière à rigidifier le réservoir de manière optimale.

De préférence, chaque élément de liaison 51, 52, 53 est distinct des autres éléments de liaison, c'est-à-dire que les éléments de liaison 51, 52, 53 sont sans contact entre eux ne se touchent pas à l'intérieur du réservoir. Ainsi, le réservoir 4 n'est pas compartimenté et le fluide énergétique peut circuler facilement à l'intérieur du réservoir 4.

Les éléments de liaison 51, 52, 53 sont creux. Notamment, les éléments de liaison, que l'on pourrait également dénommer "puits de renfort", peuvent être des tubes lorsqu'ils présentent une section circulaire. Toutefois, la section des éléments de liaison n'est pas nécessairement circulaire. Par exemple, la section des éléments de liaison pourrait aussi être carrée, rectangulaire, polygonale ou ovoïde.

La figure 5 illustre plus en détail un élément de liaison 51, les autres éléments de liaison étant conçus de manière analogue. Chaque élément de liaison 51, 52, 53 comprend une forme tubulaire pourvue d'une face externe 54 et d'une face interne 55. La face externe 54 est tournée vers l'intérieur du réservoir et est donc destinée à être en contact avec le fluide énergétique, tandis que la face interne 55 communique avec l'extérieur du réservoir et est donc destinée à être en contact avec l'air ambiant.

Les éléments de liaison 51, 52, 53 peuvent être constitués de matériau composite ou de métal. Ils peuvent aussi comprendre à la fois un matériau composite et du métal. Ils peuvent notamment comprendre un tube métallique agencé à l'intérieur d'une structure en matériau composite.

La face interne 55 peut être prévue dans un matériau différent de celui formant la structure du réservoir. La face interne 55 peut notamment être équipée d'un tube métallique qui s'étend sur toute la longueur de l'élément de liaison 51, 52, 53 ou seulement au niveau des extrémités des éléments de liaison 51, 52, 53. Le tube métallique peut éventuellement être annelé sur son pourtour extérieur de manière à garantir un bon maintien dans la structure.

Chaque élément de liaison 51, 52, 53 comprend deux extrémités opposées au niveau des deux parois opposées qu'il relie. En raison du caractère creux des éléments de liaison 51, 52, 53, le réservoir 4 comprend, pour chaque élément de liaison, une ouverture 56 traversant le réservoir de part en part. Ces ouvertures 56 ne communiquent pas avec le volume de stockage de fluide énergétique. Ces ouvertures 56 ne sont donc pas utiles pour délivrer un fluide énergétique, notamment pour délivrer de l'hydrogène sous pression à la pile à combustible 5. Les ouvertures 56 peuvent être utilisées pour fixer différents équipements du véhicule parmi lesquels le module de direction 7.

A cet effet, le réservoir 4 peut comprendre un ensemble d'interfaces de fixation 57, chacune agencée à une extrémité d'au moins un élément de liaison 51, 52, 53, notamment agencée dans une extrémité d'une ouverture 56. Comme illustré sur la figure 5, tout ou partie des interfaces de fixation 57 peut comprendre un insert destiné à coopérer avec une vis de fixation 18, par exemple une vis de fixation de type M8 ou M10. L'insert peut être formé dans le tube métallique équipant la face interne 55 des éléments de liaison ou être un élément additionnel emmanché contre la face interne 55 des éléments de liaison, par exemple une cheville en plastique. L'insert peut par exemple comprendre une longueur comprise entre 20mm et 60mm inclus. L'insert peut être taraudé ou non taraudé. L'insert fourni ainsi un moyen de fixation s'étendant profondément dans le volume du réservoir. Un tel moyen de fixation est particulièrement robuste et permet d'envisager la fixation de charges importantes.

Le module de direction 7 peut être fixé au réservoir 4 en utilisant deux interfaces de fixation, trois interfaces de fixation, ou même davantage, de manière à bien sécuriser sa fixation. Le module de direction 7 peut aussi facilement être fixé en des positions différentes du réservoir, sans devoir être modifié.

Selon une variante de réalisation, le réservoir pourrait être dépourvu d'éléments de liaison tel que décrits précédemment. La résistance du réservoir pourrait alors être conférée par l'épaisseur de ses parois, et éventuellement par l'ajouts d'autres inserts de renfort. Les vis de fixation permettant de fixer le module de direction pourraient alors être vissées directement dans l'épaisseur des parois du réservoir. L'épaisseur des parois et/ou la longueur des vis de fixation seraient adaptées en conséquence pour garantir une résistance structurelle suffisante.

Finalement, grâce à l'invention, on bénéfice d'un véhicule équipé d'un réservoir pour un fluide énergétique et d'un module de direction agencés de manière particulièrement compacte. Cet agencement fournit une protection supplémentaire au module de direction contre les chocs, ce qui permet de conserver plus facilement un véhicule manœuvrant en cas d'accident. L'agencement proposé est particulièrement compact, ce qui permet de conserver un large espace pour les passagers et/ou pour transporter des objets dans le véhicule tout en conservant une autonomie importante. Le module de direction peut également facilement être assemblé au réservoir ou désassemblé, par exemple pour des opérations de maintenance.

## Revendications

1. Agencement pour un véhicule automobile comprenant un réservoir (4) destiné à stocker un fluide énergétique et un module de direction (7) destiné à contrôler et/ou assister une orientation d'au moins une roue directrice (3G, 3D) du véhicule, le module de direction (7) étant fixé au réservoir (4).

2. Agencement selon la revendication précédente, **caractérisé en ce que** le module de direction (7) est positionné le long d'une paroi verticale (14) du réservoir.

3. Agencement selon l'une des revendications précédentes, **caractérisé en ce qu'**il comprend une patte de fixation (15) fixée, notamment visée, d'une part au réservoir (4), et fixée, notamment vissée, d'autre part au module de direction (7).

4. Agencement selon la revendication 2 et selon la revendication 3, **caractérisé en ce que** la patte de fixation (15) comprend une première branche (16) fixée contre la paroi verticale (14) du réservoir et une deuxième branche (17) fixée contre une paroi supérieure du module de direction.

5. Agencement selon l'une des revendications précédentes, **caractérisé en ce que** le réservoir (4) comprend une structure rigide constituée d'un matériau composite, et **en ce que** le module de direction (7) est fixé au réservoir par des vis de fixation pénétrant dans la structure du réservoir.

6. Agencement selon l'une des revendications précédentes, **caractérisé en ce que** le réservoir (4) comprend au moins une première paire de parois (14, 21, 22G, 22D, 23A, 23B) opposées reliées l'une à l'autre par un premier ensemble d'éléments de liaison (51, 52, 53) traversant le réservoir et s'étendant parallèlement à un premier axe (X, Y, Z), le réservoir comprenant au moins une interface de fixation (57) agencée à une extrémité d'au moins un élément de liaison, le module de direction (7) étant fixé au réservoir (4) par l'intermédiaire de l'au moins une interface de fixation (57).

7. Agencement selon l'une des revendications précédentes, **caractérisé en ce qu'**il comprend en outre au moins un longeron (32G, 32D), le réservoir (4) étant fixé à l'au moins un longeron, le module de direction (7) étant maintenu relativement à l'au moins un longeron uniquement par l'intermédiaire du réservoir.

8. Agencement selon l'une des revendications précédentes, **caractérisé en ce que** le module de direction (7) comprend un carter (8), une crémaillère (9) mobile relativement au carter, au moins une biellette de direction (10G, 10D), et un actionneur (11) tel qu'un moteur électrique configuré pour déplacer la crémaillère relativement au carter, l'au moins une biellette de direction comprenant une première extrémité reliée à la crémaillère et une deuxième extrémité destinée à être reliée à l'au moins une roue directrice (3G, 3D) pour contrôler et/ou assister l'orientation de l'au moins une roue directrice.

9. Agencement selon l'une des revendications précédentes, **caractérisé en ce que** le réservoir (4) comprend au moins un creux (20G, 20D) formant un volume libre destiné à accueillir l'au moins une roue directrice (3G, 3D) du véhicule, et **en ce que** le module de direction (7) est destiné à être relié mécaniquement à l'au moins une roue directrice pour contrôler et/ou assister l'orientation de l'au moins une roue directrice.

10. Véhicule (1), notamment véhicule automobile, **caractérisé en ce qu'**il comprend un agencement selon l'une des revendications précédentes.
